**Europäisches Patentamt**

**European Patent Office**

**Office européen des brevets**

(19)

(11)  **EP 0 854 529 A1**

(12)  **EUROPEAN PATENT APPLICATION**

(43) Date of publication:
**22.07.1998  Bulletin 1998/30**

(51) Int. Cl.$^6$: **H01M 10/40**,  H01M 10/04

(21) Application number: **97121227.9**

(22) Date of filing: **03.12.1997**

(84) Designated Contracting States:
**AT BE CH DE DK ES FI FR GB GR IE IT LI LU MC NL PT SE**
Designated Extension States:
**AL LT LV MK RO SI**

(30) Priority: **05.12.1996 JP 325485/96
05.12.1996 JP 325488/96
11.12.1996 JP 331091/96**

(71) Applicant:
**Mitsubishi Cable Industries, Ltd.
Amagasaki-shi Hyogo 660-0856 (JP)**

(72) Inventors:
• **Ijiri, Yasuo,
c/o Itami Fact.
Itami-shi, Hyogo 664 (JP)**
• **Zushi, Toshihiro,
c/o Itami Fact.
Itami-shi, Hyogo 664 (JP)**

(74) Representative:
**von Kreisler, Alek, Dipl.-Chem. et al
Patentanwälte,
von Kreisler-Selting-Werner,
Bahnhofsvorplatz 1 (Deichmannhaus)
50667 Köln (DE)**

(54)  **Sheet type lithium secondary battery**

(57)  A sheet type lithium secondary battery comprising a negative electrode sheet (1) having an active material layer (12) on one side and a positive electrode sheet (2) having active material layers (22) on both sides which is inserted between flaps of a negative electrode sheet (1) folded with said active material layer (12) placed inside, and a separator (3) impregnated with a nonaqueous liquid electrolyte and set between the active material layers of the negative electrode sheet and positive electrode sheet. Inasmuch as the sheet type lithium secondary battery of the present invention is superior to conventional products in space factor and light-weightedness, and highly safe, it is suitable as a battery for cellular phones and electronics such as personal computer.

FIG. 2

EP 0 854 529 A1

Printed by Xerox (UK) Business Services
2.16.3/3.4

**Description**

TECHNICAL FIELD OF THE INVENTION

The present invention relates to a lithium secondary battery. More particularly, the present invention relates to a sheet type lithium secondary battery having an increased battery capacity.

BACKGROUND OF THE INVENTION

Lithium secondary batteries having greater discharge capacity have been drawing much attention as batteries for cellular phone and electronics such as personal computer. Such lithium secondary batteries have been mainly three dimensional ones such as columnar and box type batteries. Nevertheless, due to the factors of space and weight, sheet type lithium secondary batteries have been of particular interest these days.

The sheet type lithium secondary batteries have a structure wherein an electrolyte is filled between the positive and negative electrode sheets and, without the sheets being wound, sealed with a suitable sheathing sheet. The electrolyte may be solid or liquid as in the three dimensional batteries. A liquid electrolyte is used to immerse a separator as in the three dimensional batteries. A sheet type lithium secondary battery is advantageous in that it keeps less heat inside the battery, because it shows fine heat radiation performance due to its thinness, which is different from three dimensional batteries. This in turn makes it highly safe by preventing incident of explosion caused by battery reaction inside the battery, even if an excess current has been flown for some reason or the battery has been penetrated with a nail etc. On the other hand, a sheet type lithium secondary battery has a drawback that it cannot provide mass capacity due to its smaller electrode area as compared to that of a three dimensional battery.

For example, Japanese Patent Unexamined Publication No. 96789/1996 proposes the use of a separator made from a polysaccharide having greater electrolytic solution retention capability, in an attempt to increase the capacity of a sheet type lithium secondary battery. The proposed use is problematic from a practical viewpoint of production costs, since such separator becomes expensive.

In addition, Japanese Patent Unexamined Publication Nos. 78152/1990, 301973/1990 and others propose folding the positive and negative electrode sheets via separator a number of times, in an attempt to increase the capacity of a sheet type lithium secondary battery. By folding the sheets many times, the area of electrodes can be increased and the capacity of the battery can be also increased. However, a sheet type lithium secondary battery wherein electrode sheets have been folded many times is associated with the occurrence of dendrite.

It is therefore an object of the present invention to provide a sheet type lithium secondary battery having a structure wherein electrode sheets have been folded to increase the capacity of the battery, which battery being free of or less associated with the occurrence of dendrite.

SUMMARY OF THE INVENTION

As a result of the study and investigation in an attempt to achieve the above-mentioned object, the present inventors have first elucidated the mechanism of the occurrence of dendrite in folded electrode sheets and developed the present invention based on such finding. That is, when electrode sheets are folded many times, a negative electrode comes to be located on the outside of a positive electrode sheet or vice versa. Of such positional combinations, the negative electrode active material layer which comes inside the active material layer of the folded positive electrode sheet suffers from the occurrence of dendrite at an end portion thereof upon charging the battery, since the positive electrode active material layer releases lithium ion to the extent that a small area of the tip of the negative electrode active material layer, that comes in contact with and enclosed by the positive electrode active material layer, cannot receive.

Accordingly, the present invention provides the following.

(1) A sheet type lithium secondary battery comprising a negative electrode sheet having an active material layer on one side thereof and folded with said active material layer being inside, a positive electrode sheet having an active material layer on both sides which is inserted between flaps of the folded negative electrode sheet, and a separator impregnated with a nonaqueous liquid electrolyte and set between the active material layers of the negative electrode sheet and the positive electrode sheet.

(2) The sheet type lithium secondary battery of (1) above, wherein one negative electrode sheet is folded in two at the center portion thereof or a portion near the center thereof.

(3) The sheet type lithium secondary battery of (1) above, wherein the entire edge of the active material layers on the both sides of the positive electrode sheet does not extend beyond the edge of the active material layer of the negative electrode sheet.

(4) The sheet type lithium secondary battery of (1) above, wherein the negative electrode active material is a graphite, and the positive electrode active material is a lithium-containing transition metal oxide.

The invention of the following (5) to (7) is directed to a particularly safe sheet type lithium secondary battery further improved in space factor and light-weightedness.

(5) The sheet type lithium secondary battery of (1) above, wherein the effective capacity of the negative electrode active material layer is 80-120 mAh per 100 mAh of the positive electrode active material layer.

(6) The sheet type lithium secondary battery of (5) above, wherein the effective capacity of the negative electrode active material layer is 100-110 mAh per 100 mAh of the positive electrode active material layer.

(7) The sheet type lithium secondary battery of (5) above, wherein the positive electrode active material layer comprises a lithium-containing transition metal oxide and the negative electrode active material layer comprises a graphite.

The present invention further provides a sheet type lithium secondary battery which is free of a short-circuit caused by dislocation of the battery elements and which permits air-tight and uniform impregnation of a sheathing sheet with a liquid electrolyte in a short time to facilitate industrial production.

(8) The sheet type lithium secondary battery of (1) above, wherein the separator comprises separator sheets adhered together to have a bag shape, said separator bag housing the positive electrode sheet and/or negative electrode sheet in such a manner that they cannot leave the bag, and the bag having an unbonded part through which the nonaqueous electrolyte can move freely from and into the bag, and wherein the separator is air-tightly housed in a sheathing sheet.

(9) The sheet type lithium secondary battery of (8) above, wherein the bonded part of the separator sheets is maintained at least until the inside of the sheathing sheet is air-tightly sealed.

(10) The sheet type lithium secondary battery of (8) above, wherein the active material of the positive electrode sheet is a lithium-containing transition metal oxide and that of the active material of the negative electrode sheet is a graphite.

BRIEF DESCRIPTION OF THE DRAWINGS

Fig. 1 is a top view of one embodiment of the present invention.

Fig. 2 shows a cross section along the line X-X in Fig. 1, wherein 1 is a negative electrode sheet, 13 is a folded part of the negative electrode sheet 1, 2 is a positive electrode sheet, 3 is a separator, 4 is a sheathing sheet, 5 is a negative electrode terminal and 6 is a positive electrode terminal.

Fig. 3 shows a cross section along the line X-X in Fig. 1, wherein a separator bag 3' is used as the separator.

Fig. 4 shows another cross section along the line X-X in Fig. 1, wherein a separator bag 3' is used as the separator.

Fig. 5 is a top view of a separator bag to be used in the present invention.

Fig. 6 is a top view of another separator bag to be used in the present invention.

Fig. 7 is a top view of a yet another separator bag to be used in the present invention.

Fig. 8 shows a cross section along the line Y-Y in Fig. 7.

DETAILED DESCRIPTION OF THE INVENTION

According to the present invention, the folded negative electrode sheet sandwiches the positive electrode sheet having active material layers on both sides, as a result of which the end portion of the positive electrode sheet is enclosed with a large area of the negative electrode active material layer. Consequently, a small amount of lithium ion discharged from the inserted end portion of the positive electrode sheet is fully received by the large area of the negative electrode active material layer, so that the occurrence of dendrite in this portion can be substantially obliterated. In a more preferred embodiment of the present invention, the entire edge of the active material layer of the both sides of the positive electrode sheet does not extend beyond the edge of the active material layer of the negative electrode sheet. That is, the entire edge of the active material layer of the negative electrode sheet is present outside the entire edge of the active material layer of the both sides of the positive electrode sheet, so that the lithium ion discharged from the entire edge of the active material layer of the both sides of the positive electrode sheet is received by the negative electrode active material layer, thus substantially eliminating the occurrence of dendrite in the vicinity of the edge of the negative electrode active material layer.

According to the present invention, the negative electrode active material, positive electrode active material, positive and negative collectors, nonaqueous liquid electrolyte and separator may be any that are known in the fields of lithium secondary battery or lithium ion secondary battery. In particular, non-metallic lithium negative and positive electrode active materials are generally preferable, since they further improve the safety and handling property of the sheet type lithium secondary battery.

Examples of preferable negative electrode active material include graphites such as various natural graphites and artificial graphites (e.g., fiber graphite, scale graphite, spherical graphite and the like), and examples of binder include polytetrafluoroethylene, polyvinylidene fluoride, polyethylene, ethylene-propylene-diene polymer and the like.

Examples of preferable positive electrode active material include those having a potential difference from negative electrode of at least 1V, such as lithium-containing transition metal oxides of $LiMn_2O_4$, $LiCoO_2$, $LiNi_{0.5}Co_{0.5}O_2$, $LiNiO_2$, Li-Co-P complex oxide (e.g., $LiCo_{0.5}P_{0.5}O_2$, $LiCo_{0.4}P_{0.6}O_2$, $LiCo_{0.6}P_{0.4}O_2$, $LiCo_{0.3}Ni_{0.3}P_{0.4}O_2$, $LiCo_{0.2}Ni_{0.2}P_{0.6}O_2$ and the like) and the like. Of these, an Li-Co-P complex oxide capable of increasing the electromotive force and charge discharge voltage of the secondary battery is particularly preferable. Examples of the binder include polytetrafluoroethylene, polyvinylidene fluoride, polyethylene, ethylene-propylene-diene polymer and the like. A conductive material includes, for example, various conductive graphites, conductive carbon black and the like.

As the negative electrode collector, conductive metals such as copper, nickel, silver and SUS are preferable, which are exemplified by foil or foil with holes having a thickness of about 5-100 μm, particularly preferably about 8-50 μm, and expanded metal having a thickness of about 20-300 μm, particularly about 25-100 μm.

As the positive electrode collector, conductive metals such as aluminum, aluminum alloy, titanium and the like are preferable, which are exemplified by foil or foil with holes having a thickness of about 10-100 μm, particularly preferably about 15-50 μm, and expanded metal having a thickness of about 25-300 μm, particularly about 30-150 μm.

The negative electrode sheet is exemplified by those having a negative electrode active material layer having a thickness of about 20-500 μm, particularly about 50-200 μm, which is formed by applying a composition of a negative electrode active material and a binder on one side of the negative electrode collector, drying thoroughly and press-extending.

The amount of the negative electrode active material to be used is about 80-96 parts by weight per 100 parts by weight of the total amount of the negative electrode active material and the binder.

The positive electrode sheet is exemplified by those having a positive electrode active material layer having a thickness of about 20-500 μm, particularly about 50-200 μm, on both sides, which are formed by applying a composition of a positive electrode active material, a conductive material and a binder on both sides of the positive electrode collector, drying thoroughly and press-extending.

The amount of the positive electrode active material to be used is about 80-95 parts by weight per 100 parts by weight of the total amount of the positive electrode active material, conductive material and binder; the amount of the binder is about 1-10 parts by weight per 100 parts by weight of the positive electrode active material; and the amount of the conductive material is about 3-15 parts by weight per 100 parts by weight of the positive electrode active material.

While the size and shape of the positive electrode sheet vary depending on the use of the lithium secondary battery, when it is used for cellular phones, for example, it is a square or rectangle having an area of about 30-100 $cm^2$. The negative electrode sheet has an area of at least twice or more larger than that of one side of the positive electrode sheet to achieve the object of the present invention.

Examples of the nonaqueous liquid electrolyte include electrolyte solutions obtained by dissolving salts in an organic solvent. Such salts include, for example, $LiClO_4$, $LiBF_4$, $LiPF_6$, $LiAsF_6$, $LiAlCl_4$, $Li(CF_3SO_2)_2N$ and the like, which may be used alone or in combination.

Examples of the organic solvent include ethylene carbonate, propylene carbonate, dimethyl carbonate, diethyl carbonate, ethyl methyl carbonate, dimethyl sulfoxide, sulforane, γ-butyrolactone, 1,2-dimethoxyethane, N,N-dimethylformamide, tetrahydrofuran, 1,3-dioxorane, 2-methyltetrahydrofuran, diethyl ether and the like, which may be used alone or in combination. The concentration of such salts in an electrolyte solution is appropriately about 0.1-3 moles/$\ell$.

The material of the separator and a method for impregnation of the electrolyte solution follow those conventionally known. For example, the separator may be made from polyolefins such as polyethylene and polypropylene, polyesters such as polyethylene terephthalate, thermoplastic fluororesins such as ethylene-tetrafluoroethylene copolymer and celluloses, which may be used alone or in combination. Impregnation may include, for example, placing the positive and negative electrode sheets and a separator in a sheathing bag into which a nonaqueous liquid electrolyte is filled under reduced pressure, and closing the sheathing bag while retaining the reduced pressure.

In response to the increasing demand in recent years for light-weightedness and less thickness of a sheet type lithium secondary battery, the effective capacity of the negative electrode active material layer has been reduced in the present invention.

In columnar and box type three dimensional lithium secondary batteries, a negative electrode sheet and a positive electrode sheet are wound many times with an electrolyte layer intervening between them and housed in a sheathing container. Such structure including plural windings causes poor heat radiation performance inside the battery. When an excess current has flown by a failure for some reason in the battery, topical overheating occurs, which may be accumulated to cause firing of the battery. In particular, when the negative electrode active material layer has an excessively less effective capacity than that of the positive electrode active material layer, the risk of explosion tends to increase.

For example, in Technical Report of the Institute of Electronics, Information and Communication Engineers, PE94-57, CPM94-100 (1995-01) reporting on firing test of a battery by nail penetration, the need has been pointed out for setting the effective capacity of the negative electrode active material layer comprising a graphite to at least 170 mAh per 100 mAh of the positive electrode active material layer to eliminate the risk of firing of the lithium secondary battery.

Such ratio of the effective capacity of the three dimensional lithium secondary battery has been adopted by conventional sheet type lithium secondary batteries. The effective capacity of the negative electrode active material layer is in proportion to the amount used of the negative electrode active material constituting said layer, and an increase thereof leads to greater weight and greater thickness of the negative electrode active material layer and the battery itself.

However, nail penetration tests and other topical destruction tests of sheet type lithium secondary batteries having a negative electrode active material layer made from various graphites have revealed that they are unexpectedly highly safe even when the negative electrode active material layer has a considerably low effective capacity, because the very sites of topical destruction, not to mention other parts of the battery, showed no substantial increase in temperature. This is because the sheet type lithium secondary battery is generally thin and has extremely superior heat radiation performance, so that a topical overheating in the battery can be cooled down in a very short time.

In the present invention, the effective capacity (mAh) of each positive and negative active material layer can be obtained by the following formula (1):

$$Effective\ capacity = C \times W \tag{1}$$

wherein C is a unit capacity (mAh/g) per g of the active material in each of the positive and negative active material layers and W is the weight (g) of the total active material in the active material layer. Inasmuch as the unit capacity of each positive and negative active material layer and the effective capacity vary depending on the active material of the counter electrode and the kind of electrolyte to be used, the effective capacity in the present invention is determined by the following method.

[Measurement of the effective capacity ]

Measured according to three-electrode method described in Akira Fujishima et al., DENKIKAGAKUSOKUTEIHO (JO), p. 6, Gihodoshuppan Co., Ltd., Tokyo, 1991, and using metal lithium as counter electrode and reference electrode.

A liquid electrolyte is air-tightly impregnated in the separator sheet made from an optional material, such that said liquid electrolyte maintains the distance between the above-mentioned positive and negative electrode sheets.

When the effective capacity of the negative electrode active material layer is excessively greater than that of the positive electrode active material layer, the object of the present invention cannot be achieved, whereas when it is excessively smaller, dendrite may be developed more positively. Thus, the effective capacity of the negative electrode active material layer is 80-120 mAh, preferably 100-110 mAh, per the effective capacity 100 mAh of the positive electrode active material layer.

Thus, the effective capacity of negative electrode active material layer does not need to be made greater than that of the positive electrode active material layer, though such is the case with conventional ones, and the effective capacity of the positive and negative electrode active material layers may be made the same. Therefore, the weight and thickness of the sheet type lithium secondary battery can be decreased corresponding to the decreased amount of the negative electrode active material layer.

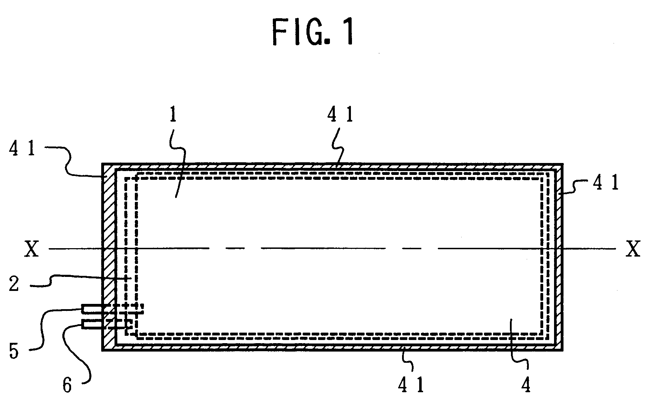

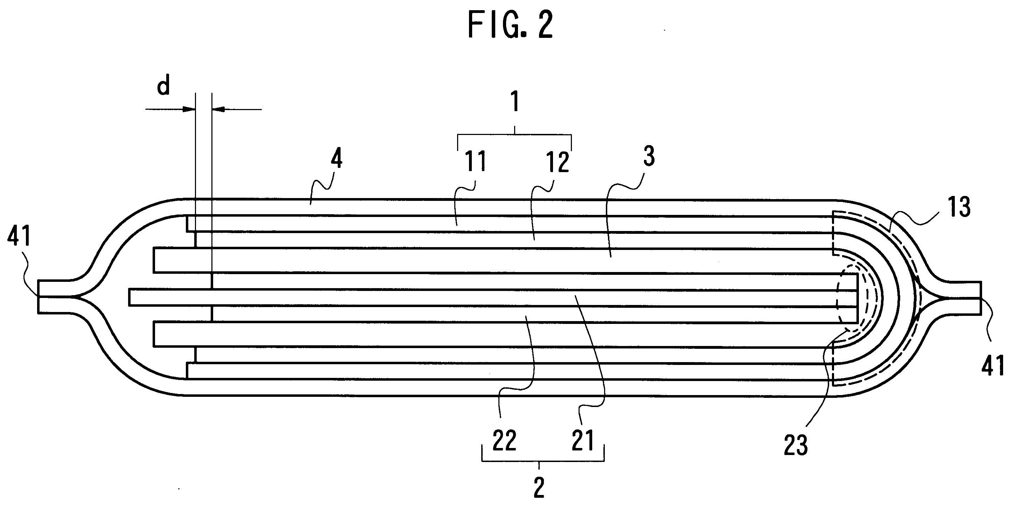

The present invention is explained in more detail by illustrative Examples. Fig. 1 shows the top view of one embodiment of the present invention and Fig. 2 shows a cross section along the line X-X in Fig. 1.

In Figs. 1 and 2, 1 means a negative electrode sheet consisting of a negative electrode collector 11 and a negative electrode active material layer 12, 13 means a folded part of the negative electrode sheet 1, 2 means a positive electrode sheet consisting of a positive electrode collector 21 and a positive electrode active material layer 22, 23 is an end portion of the positive electrode sheet, 3 is a separator disposed between the negative electrode sheet 1 and the positive electrode sheet 2, 4 is a sheathing sheet, 41 a sealed part of the sheathing sheet, 5 is a negative electrode terminal, and 6 is a positive electrode terminal. The separator 3 is impregnated with a nonaqueous liquid electrolyte.

The sheathing sheet 4 is impermeable to gas and water, and preferred is a complex sheet having a thermoplastic resin laminate layer of polyester, polypropylene and the like, on the both sides of a metal foil of, for example, copper, aluminum and the like, wherein said thermoplastic resin laminate layer can be heated to melt-seal the content.

The positive electrode active material layer 22 located at the end portion 23 of the positive electrode sheet is, as shown in Fig. 2, enclosed by the negative electrode active material layer 12, and the entire edge of the active material layers of the both sides of the positive electrode sheet does not extend beyond the edge of the active material layer of the negative electrode sheet. From the positional relationship between these positive and negative electrode active material layers, the occurrence of dendrite on the negative electrode active material layer 12 can be overcome. In the present invention, the distance between the negative electrode active material layer 12 and the positive electrode active material layer 22 is about the same as that in conventional three dimensional lithium secondary batteries, namely, 10-100 μm. The difference d between the edges of the positive and negative electrode active material layers as shown in Fig. 2 is at least about 0.5 mm, preferably about 0.5-5 mm.

The embodiments shown in Figs. 1 and 2 can be produced by the following method. That is, a negative electrode sheet 1 which is about twice longer than a positive electrode sheet 2 and a separator 3 are superimposed, the both are folded in two at about the center thereof with the separator 3 coming inside, the positive electrode sheet 2 is inserted between the flaps of the separator 3 as shown in Fig. 2. The above-mentioned positive and negative electrode sheets have been welded with terminals 5 and 6, respectively. Then, the obtained assembly is set between two sheathing sheets 4, and three sides of the sheathing sheet 4 are sealed by heat-melting. The separator 3 is impregnated with a nonaqueous liquid electrolyte under reduced pressure and the remaining side of the sheathing sheet 4 is sealed by heat-melting while retaining the reduced pressure to give a sheet type lithium secondary battery.

A sheet type lithium secondary battery is often considered to be easily produced in view of the simpler structure than that of a three dimensional type battery. On the contrary, industrial production using, as an electrolyte, a nonaqueous liquid electrolyte is unexpectedly difficult. This is because of various problems arising from air-tightly sealing said liquid electrolyte in a sheathing sheet bag. The following description clarifies this point.

In columnar and box type three dimensional lithium secondary batteries, the sheathing container having a three dimensional structure is mechanically strong. Therefore, after necessary battery elements are housed in a sheathing container, the sheathing container is considered a vacuum container and a liquid electrolyte can be injected therein upon making the inside of the container vacuum or having a reduced pressure in atmosphere.

In contrast, the sheathing sheet of the sheet type lithium secondary battery has an envelope shape and cannot be subjected to a treatment regularly done in vacuo or under reduced pressure in atmosphere. Thus, after necessary battery elements are housed in the envelope sheathing container, the sheathing sheet should be housed in a different vacuum container into which a liquid electrolyte is injected and the sheathing sheet is sealed. In so doing, the positive electrode sheet, separator and negative electrode sheet may be dislocated due to the transport of the envelope sheathing container, to cause a short-circuit between the positive and negative electrode sheets. This short-circuit problem can be resolved by making the separator a bag by bonding each end portion of two separator sheets (hereinafter separator bag) and housing the positive electrode sheet and/or negative electrode sheet in this separator bag. For example, Japanese Patent Unexamined Publication Nos. 7-50601 and 8-167401 disclose housing the positive electrode sheet and/or negative electrode sheet in a separator bag for some other purpose in the production of a three dimensional type battery. When a separator bag is used, however, the movement of the liquid electrolyte in the envelope sheathing sheet produces difference in the speed thereof between the inside and outside of the separator bag, due to the presence of the bag itself, which in turn results in a case where the inside of the envelope sheathing sheet cannot be filled air-tightly and uniformly with a liquid electrolyte.

The material of the separator sheet forming the separator bag includes, for example, one or more from polyolefins such as polyethylene, polypropylene and the like, wherein two or more thereof are used, or a laminate of two layers or more or a mixture may be used, polyesters such as polyethylene terephthalate, thermoplastic fluororesins such as ethylene-tetrafluoroethylene copolymer, celluloses and the like. The shape of the sheet is preferably a film with holes, woven fabric, nonwoven fabric and the like having an air permeability as determined by the method defined in JIS-P8117 of about 5-2000 sec/100 cc and a thickness of about 10-200 μm.

The shape of the separator bag and the way of housing the positive and negative electrode sheets may vary. The separator bag may be a single bag to contain either one of the positive and negative electrode sheets, or has a plural bag structure to contain the positive and negative electrode sheets separately. Alternatively, two single bags may be prepared which contain positive and negative electrode sheets separately.

Examples of the single bag structure include one prepared by folding one separator sheet in two and bonding three open sides, one prepared by superimposing two separator sheets and bonding four sides and the like. Examples of the plural bag structure include one prepared by folding one separator sheet in two, placing a different separator sheet prepared separately on or between said folded sheets, and bonding the necessary sides thereof, and one prepared by superimposing three separator sheets and bonding the four sides.

At least one side of the four sides of the separator bag is left unbonded before housing the positive and negative electrode sheets, so that the sheets can be inserted, just like an envelope before sealing, and the unbonded side is bonded after housing the sheets. The positive and negative electrode sheets thus housed cannot be taken out from the separator bag at least until the sheathing sheet is sealed air-tightly.

In other words, the bonded parts of the separator sheets are maintained at least until the inside of the sheathing sheet is sealed air-tightly. The separator bag has an unbonded part to be mentioned later in Examples, so that the liquid electrolyte injected into the above-mentioned envelope sheathing sheet can move into and out from the separator bag.

Examples of the material constituting the sheathing sheet include various plastics, thin panel or foil of metal (e.g., copper and aluminum), plastic laminate metal thin panel or foil having a plastic laminate layer on one or both sides, and the like. In particular, a plastic laminate metal thin panel or foil having superior antipermeability to water and gas, and superior electric insulation property is preferable.

The positive electrode sheet and/or negative electrode sheet are/is housed in the above-mentioned separator bag. However, the bag has an unbonded part in the periphery of the above-mentioned two separator sheets, so that the liquid electrolyte injected into the envelope sheathing sheet can move freely through the unbonded part from and into the bag, whereby the liquid electrolyte can uniformly fill the entire cavity of an envelope sheathing sheet in an extremely short time and thus, can fill the inside of the sheathing sheet air-tightly and uniformly.

On the other hand, the positive electrode sheet and/or negative electrode sheet are/is kept in a separator bag electrically safely, since they cannot move out from the bag at least until the sheathing sheet is air-tightly sealed, whereby the two electrodes are free of the short-circuit problem.

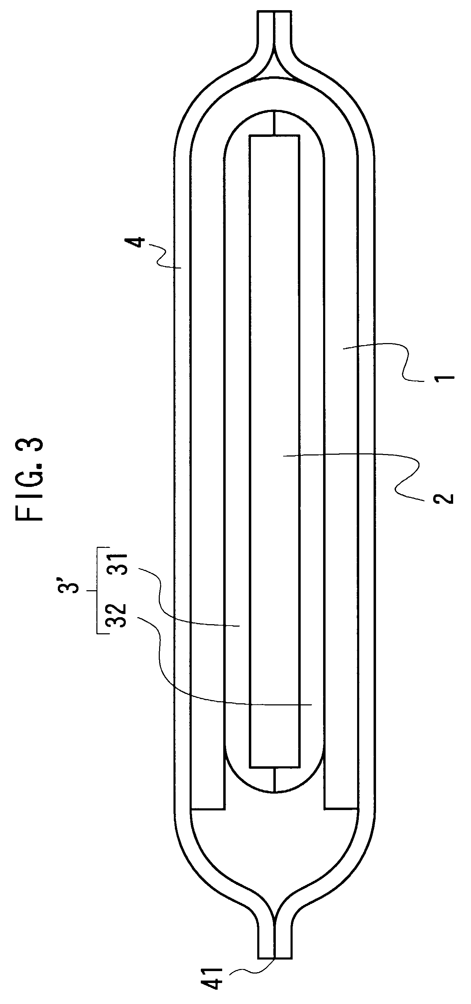

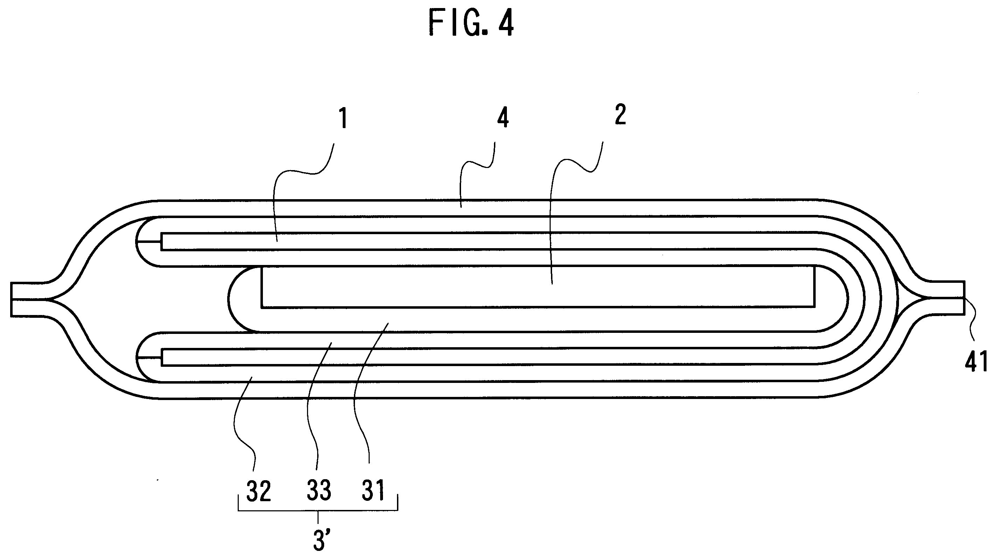

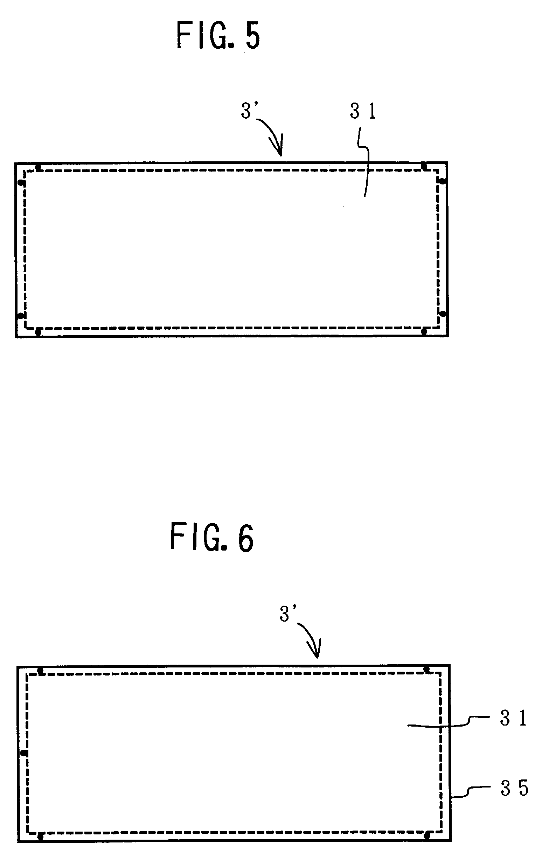

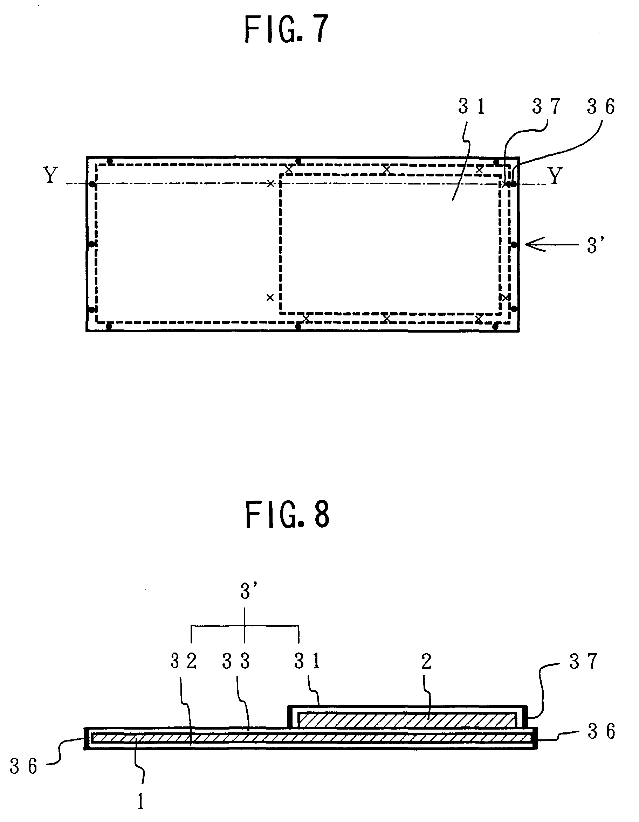

More particularly, Fig. 1 shows the top view of one embodiment of the present invention and Figs. 3 and 4 show cross sections along the line X-X in Fig. 1. Figs. 5-7 are the top views of the separator bag to be used in the present invention, which explain bonded and unbonded parts. Fig. 8 shows a cross section along the line Y-Y in Fig. 7.

In Fig. 1 and Fig. 3-Fig. 8, 1 means a negative electrode sheet, 2 means a positive electrode sheet, 3' means a separator bag, 31, 32 and 33 mean a separator sheet constituting the separator bag, 4 is a sheathing sheet, 41 means a bonded part of the sheathing sheet, 5 means a negative electrode terminal, 6 means a positive electrode terminal and 7 means a nonaqueous liquid electrolyte. In Fig. 1, separator bag 3' is omitted. Conversely in Figs. 5-7, the negative electrode sheet 1, positive electrode sheet 2 and sheathing sheet 4 are omitted. The negative electrode sheet 1 and positive electrode sheet 2 both consist of a collector and an active material layer. In Figs. 3 and 4, and Fig. 8, the collector and an active material layer are omitted for simplification of the drawing, though negative electrode sheet 1 and positive electrode sheet 2 include the omitted parts.

In Fig. 3, the positive electrode sheet 2 alone is housed in a single separator bag 3' consisting of separator sheets 31 and 32, and the negative electrode sheet 1 remains naked. Conversely, the negative electrode sheet 1 alone may be housed in the separator 3', and the positive electrode sheet 2 may be left naked. Moreover, a separator bag having a two-single-bag structure may be prepared and the negative electrode sheet 1 and positive electrode sheet 2 may be housed therein separately.

In Fig. 4, the negative electrode sheet 1 and positive electrode sheet 2 are housed separately in a separator bag 3' having a plural bag structure consisting of separator sheets 31, 32 and 33.

The separator bag shown in Fig. 5 has at least two separator sheets 31 and 32 or 31-33 (hereinafter to be referred to as separator sheet group) topically bonded at the edge thereof. In Figs. 5-7, each sheet in the separator sheet group has the same size and is superimposed on each other, so that the uppermost separator sheet 31 alone is shown wherein topical bonded points are shown by black points. The separator sheet group is point welded at two points in the longitudinal and transverse directions of the sheet, totaling in 8 points. In the present invention, the method for the topical bonding is not limited, and the separator sheets may be melted together and adhered with a suitable adhesive, or other method may be used. The sites and degree of adhesion may vary as long as it achieves the object of the present invention.

In the separator bag shown in Fig. 6, one separator sheet is folded at the center 35 thereof and the upper flap is shown by 31. The two flaps are point welded at two points in the transverse direction and one point in the longitudinal direction, thus totaling in 5 points.

In generality, when the positive and negative electrode sheets are counterfaced, the entire edge of the active material layer of the negative electrode sheet extends beyond the entire edge of the active material layer of the positive electrode sheet, for the prevention of dendrite in a lithium secondary battery. In other words, it is preferable that the active material layer of the positive electrode sheet be within the area of the negative electrode active material layer, when it is projected on the negative electrode sheet active material layer.

In Fig. 7 and Fig. 8, the negative electrode sheet 1 and the positive electrode sheets 2 having a little smaller area than the negative electrode sheet 1 are housed separately in the two parts in the separator bag 3' wherein three separator sheets 31-33 are topically bonded, to positively ensure the positional relationship between the above-mentioned positive and negative electrode sheets. The twelve black points 36 shown in Fig. 7 are topical bonding points of separator sheets 33 and 32 to house the negative electrode sheet 1, and the total of ten points of X 37 are topical bonding points of separator sheets 31 and 33 to house the positive electrode sheet 2. Fig. 8 shows the cross section of topical bonding points at the black points and X points. Each X point 37 is located inside each black point 36, and when they are topically bonded, the positive and negative electrode sheets are in the above-mentioned counter positional relationship.

In Figs. 5-7, except the center 35 of the folded part of the separator sheet in Fig. 6, the part other than the black points and X points is not bonded. Thus, the liquid electrolyte can freely move into and out from the separator bag through the unbonded part. In the present invention, any part can be the unbonded part and the size thereof is not subject to any particular limitation as long as the above-mentioned free movement of the electrolyte is secured.

In the present invention, when the inside of the sheathing sheet is sealed in vacuo or under reduced pressure, the negative electrode sheet 1, positive electrode sheet 2 and separator 3' do not move relative to each other, thus obviating the problem of short-circuit caused by the relative movement between the negative electrode sheet 1 and positive electrode sheet 2. Thus, in the present invention, the bonding strength at each bonding site is sufficient if it holds until the inside of the sheathing sheet is sealed air-tightly.

The sheet type lithium secondary battery of the present invention is free of the problems of short-circuit and insufficient impregnation with liquid electrolyte between positive and negative electrode sheets, which problems being caused by the dislocation of the battery elements. Thus, industrial production is extremely easy and the space factor, light-weightedness and safety based on fine heat radiation, which are the advantages of the sheet type lithium secondary battery, can be fully utilized.

Example 1

A negative electrode sheet having an active material layer having a thickness of 70 μm which was made from a composition of fiber graphite (90 parts by weight) and polyvinylidene fluoride (10 parts by weight) on the entire surface of one side of a copper foil (length 30 cm, width 4.1 cm, thickness 14 μm), a polypropylene separator having a length and width of more than those of said negative electrode sheet, and a positive electrode sheet having an active material layer having a thickness of 73 μm which was made from a composition of $LiCoO_2$ (90 parts by weight), a conductive graphite (7 parts by weight) and polyvinylidene fluoride (3 parts by weight) on the entire surface of both sides of an aluminum foil (length 14 cm, width 3.9 cm, thickness 20 μm) were prepared. A sheathing envelope was also prepared, which had a polyester laminate layer on one side of an aluminum foil (thickness 10 μm) and a polypropylene laminate layer on the other side thereof, three sides of the two complex sheets being heat-melt sealed.

The separator was placed on the active material layer of the negative electrode sheet and folded at the about center with the separator being inside. Then, the positive electrode sheet was inserted between the folded separators. The thus-obtained assembly was placed in the above-mentioned sheathing envelope, and a nonaqueous liquid electrolyte obtained by dissolving $LiPF_6$ (1 mole) per litter of a mixed solvent (1 ℓ) of ethylenecarbonate and ethyl methyl carbonate (volume ratio 1:1) was injected. The pressure was reduced to not more than 50 mmHg and the remaining side of the sheathing envelope was sealed by heat-melting while retaining the reduced pressure to give the sheet type lithium secondary battery.

Comparative Example 1

In the same manner as in Example 1 except that the size and positional relationship between the negative electrode sheet and positive electrode sheet were completely reversed, the sheet type lithium secondary battery was obtained.

The battery of Example 1 had an initial discharge capacity of 250 mAh and capacity retention after 100 cycles of charge-discharge was 96%. In contrast, the battery of Comparative Example 1 had an initial discharge capacity of 250 mAh but abnormal charge discharge curve was observed after 15 cycles of charge-discharge. The battery was deassembled to find an obvious occurrence of dendrite. The battery of Example 1 was free of occurrence of dendrite after 100 cycles of charge-discharge.

In the present invention, the negative electrode sheet may be folded three times or less and a positive electrode sheet having active material layer on both sides may be inserted in each folded part. The greater the number of folding of the negative electrode sheet, the greater the restoring force to the state before folding the negative electrode sheet, so that the production of the sheet type battery becomes complicated. It is therefore particularly preferable to use only one negative electrode sheet and fold same into two at the center portion or a position nearby.

The sheet type lithium secondary battery of the present invention has a long service life after substantially solving the problem of dendrite. Inasmuch as the battery capacity can be increased, the space factor, light-weightedness and safety based on fine heat radiation, which are the advantages of the sheet type lithium secondary battery, can be fully utilized.

Example 2

A negative electrode sheet having an active material layer having a thickness of 60 μm and made from a composition of fiber graphite (90 parts by weight) and polyvinylidene fluoride (10 parts by weight) on the entire surface of one side of a copper foil (length 30 cm, width 4.1 cm, thickness 14 μm), a polypropylene separator having a length and width of greater than those of said negative electrode sheet, and a positive electrode sheet having an active material layer having a thickness of 73 μm and made from a composition of $LiCoO_2$ (90 parts by weight), a conductive graphite (7 parts by weight) and polyvinylidene fluoride (3 parts by weight) on the entire surface of both sides of an aluminum foil (length 14 cm, width 3.9 cm, thickness 20 μm) were prepared. A sheathing envelope was also prepared, which had a polyester laminate layer on one side of an aluminum foil (thickness 10 μm) and a polypropylene laminate layer on the other side thereof, three sides of the two complex sheets having been heat-melt sealed. The effective capacity of the negative electrode active material layer and positive electrode active material layer as measured by the above-mentioned method were 260 mAh and 250 mAh, respectively, and the ratio thereof was 1.04:1.

The above-mentioned negative electrode sheet and separator were superimposed, and folded at the about center with the separator being inside. Then, the positive electrode sheet was inserted between the folded separators. The thus-obtained assembly was placed in the above-mentioned sheathing envelope, and a nonaqueous liquid electrolyte obtained by dissolving $LiPF_6$ (1 mole) per litter of a mixed solvent (1 $\ell$) of ethylenecarbonate and ethyl methyl carbonate (volume ratio 1:1) was injected therein. The pressure was reduced to not more than 50 mmHg and the remaining side of the sheathing was sealed by heat-melting while retaining the reduced pressure to give the sheet type lithium secondary battery.

Comparative Example 2

In the same manner as in Example 2 except that the thickness of the active material layer of the negative electrode sheet was 200 μm (the effective capacity ratio of the negative electrode active material layer and positive electrode active material layer being 2.5:1), the sheet type lithium secondary battery was obtained.

The characteristics of the sheet type lithium secondary batteries of the above-mentioned Example 2 and Comparative Example 2 are as follows.

|  | Example 2 | Comparative Example 2 |
| --- | --- | --- |
| initial discharge capacity | 250 mAh | 250 mAh |
| total weight of battery | 11 g | 15 g |
| thickness of battery | 0.65 mm | 0.85 mm |
| nail penetration test | no firing | no firing |

Inasmuch as the sheet type lithium secondary battery of the present invention is superior to conventional products in space factor and light-weightedness, and highly safe, it is suitable as a battery for cellular phones and electronics such as personal computer.

This application is based on application Nos. 8-325485, 8-325488 and 8-331091 filed in Japan, the contents of which are incorporated hereinto by reference.

**Claims**

1. A sheet type lithium secondary battery comprising a negative electrode sheet having an active material layer on one side thereof and folded with said active material layer being inside, a positive electrode sheet having an active material layer on both sides which is inserted between flaps of the folded negative electrode sheet, and a separator impregnated with a nonaqueous liquid electrolyte and set between the active material layers of the negative electrode sheet and the positive electrode sheet.

2. The sheet type lithium secondary battery of claim 1, wherein one negative electrode sheet is folded in two at the center portion or a portion near the center thereof.

3. The sheet type lithium secondary battery of claim 1, wherein the entire edge of the active material layers on the both sides of the positive electrode sheet does not extend beyond the edge of the active material layer of the negative electrode sheet.

4. The sheet type lithium secondary battery of claim 1, wherein the negative electrode active material is a graphite, and the positive electrode active material is a lithium-containing transition metal oxide.

5. The sheet type lithium secondary battery of claim 1, wherein the effective capacity of the negative electrode active material layer is 80-120 mAh per 100 mAh of the positive electrode active material layer.

6. The sheet type lithium secondary battery of claim 5, wherein the effective capacity of the negative electrode active material layer is 100-110 mAh per 100 mAh of the positive electrode active material layer.

7. The sheet type lithium secondary battery of claim 5, wherein the positive electrode active material layer comprises a lithium-containing transition metal oxide and the negative electrode active material layer comprises a graphite.

8. The sheet type lithium secondary battery of claim 1, wherein the separator comprises separator sheets adhered together to have a bag shape, said separator bag housing at least one of the positive electrode sheet and negative electrode sheet in such a manner that they cannot release from the bag, and the bag having an unbonded part through which the nonaqueous electrolyte can move freely from and into the bag, and wherein the separator is air-tightly housed in a sheathing sheet.

9. The sheet type lithium secondary battery of claim 8, wherein the bonded part of the separator sheets is maintained at least until the sheathing sheet is air-tightly sealed.

10. The sheet type lithium secondary battery of claim 8, wherein the active material of the positive electrode sheet is a lithium-containing transition metal oxide and that of the active material negative electrode sheet is a graphite.

# FIG. 1

# FIG. 2

# FIG. 3

EP 0 854 529 A1

# FIG. 4

EP 0 854 529 A1

# FIG. 5

3'  31

# FIG. 6

3'

31

35

# FIG. 7

# FIG. 8

EP 0 854 529 A1

European Patent
Office

**EUROPEAN SEARCH REPORT**

Application Number

EP 97 12 1227

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 014, no. 380 (E-0965), 16 August 1990 & JP 02 139873 A (RICOH CO LTD), 29 May 1990, | 1-3,8,9 | H01M10/40 H01M10/04 |
| Y | * abstract * | 4,7 | |
| Y | US 5 498 489 A (DASGUPTA SANKAR ET AL) * column 4, line 12 – column 5, line 10 * | 4,7 | |
| X | EP 0 397 248 A (EASTMAN KODAK CO) * page 2, line 26 – page 3, line 3 * | 1-3,5,6 | |
| X | US 5 037 713 A (YOSHINO MASAKI ET AL) * column 14, line 10-33 * | 1-3 | |
| X | PATENT ABSTRACTS OF JAPAN vol. 009, no. 251 (E-348), 8 October 1985 & JP 60 100362 A (MATSUSHITA DENKI SANGYO KK), 4 June 1985, * abstract * | 1-3 | |
| | | | TECHNICAL FIELDS SEARCHED (Int.Cl.6) |
| | | | H01M |

The present search report has been drawn up for all claims

| Place of search | Date of completion of the search | Examiner |
|---|---|---|
| THE HAGUE | 18 March 1998 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17